# EUROPÄISCHE PATENTSCHRIFT

(11) **EP 0 801 618 B1**
(45) Veröffentlichungstag und Bekanntmachung des Hinweises auf die Patenterteilung: **15.07.1998**
(21) Anmeldenummer: 96901264.0
(22) Anmeldetag: 12.01.1996
(51) Int. Cl.: B65B 51/22

(54) **VERFAHREN UND VORRICHTUNG ZUM VERSCHLIESSEN VON GEFÜLLTEN FALTSCHACHTELPACKUNGEN**
METHOD AND DEVICE FOR CLOSING FILLED FOLDING-BOX PACKAGING CONTAINERS
PROCEDE ET DISPOSITIF PERMETTANT DE FERMER DES EMBALLAGES SE PRESENTANT SOUS LA FORME DE BOITES PLIANTES

(30) Priorität: 14.01.1995 DE 19500971
(43) Veröffentlichungstag der Anmeldung: 22.10.1997
(73) Patentinhaber: SIG Combibloc GmbH, 52441 Linnich (DE)
(72) Erfinder: BÖMER, Hans, D-40699 Erkrath (DE); MAINZ, Hans-Willi, D-52525 Heinsberg (DE)
(74) Vertreter: Cohausz & Florack
(86) Internationale Anmeldenummer: EP9600119
(87) Internationale Veröffentlichungsnummer: WO9621595

(56) Entgegenhaltungen:
- FR-A- 2 366 996
- GB-A- 2 028 224

## Beschreibung

Die Erfindung betrifft zunächst ein Verfahren zum Verschließen von gefüllten, aus bodengesiegelten Schlauchabschnitten gebildeten oben offenen Faltschachtelpackungen, wobei das Verschließen durch Versiegeln und Umlegen der Giebelnaht bzw. Stegnaht mittels einer Ultraschallverschweißung mit Hilfe eines eine Ausnehmung für die Längsnaht der Faltschachtelpackung aufweisenden Ambosses und einer Sonotrode erfolgt

Darüber hinaus betrifft die Erfindung eine Vorrichtung zum Füllen solcher Faltschachtelpackungen und Verschließen der Giebelnaht, mit einer Zuführeinheit für die Schlauchabschnitte, einer Vorfalteinheit, einer Fülleinheit, einer einen Amboß und eine Sonotrode aufweisenden Verschließeinheit und Übergabe- und Transporteinrichtungen für die Faltschachtelpackungen, wobei der Amboß eine Ausnehmung für die Längsnaht der Faltschachtelpackung aufweist.

Es sind quaderförmige Flachgiebelpackungen und Verfahren zu ihrem Verschließen bekannt (GB-A-15 09 622), die vornehmlich auf dem Gebiet der Flüssigkeitsverpackung bei normalen Kalt-, Kalt-Steril-, Heiß- und aseptischer Füllung eingesetzt werden. Dabei ist man bemüht, die Packungen unmittelbar nach dem Füllen zu verschließen, um jegliche Verschmutzungsmöglichkeit des Packungsinhaltes zuverlässig ausschließen zu können.

Es ist bekannt, mit Faltrillen versehene, zu einem Schlauchabschnitt zusammengeklebte Faltschachtelzuschnitte beispielsweise auf einem umlaufenden Dornrad mit radial angeordneten, im Querschnitt rechteckigen Dornen aufzuformen und am bodenseitigen Ende mit einer Siegelung zu verschließen. Als Zuschnittmaterial wird dabei heißsiegelfähiges Kartonverbundmaterial verwendet. Die auf diese Weise gebildeten bodengesiegelten und an einem Ende offenen Faltschachtelbehälter werden mittels einer Übergabestation von den Dornen abgezogen und auf einen waagerecht und geradlinig verlaufenden, eine Vielzahl von Zellen aufweisenden Transporteur gegeben, der die Behälter in Reihe schrittweise zunächst durch eine Sterilisierstation und weiter unter einen oder mehrere im Abstand der Behälter hintereinander angeordnete Produktauslässe transportiert. Nach dem Befüllen der Faltschachtelpackungen müssen die Packungen an ihrem oberen Ende durch Versiegeln der sogenannten Steg- oder Giebelnaht geschlossen werden. Dazu erfolgt zunächst eine Vorfaltung des oberen Bereiches der Faltschachtelpackung zu einer Stegnaht. Die eigentliche Verschweißung der so gebildeten Stegnaht erfolgt mittels Amboß und Sonotrode.

Damit nun eine optimale Dichtigkeit der Packung garantiert werden kann, muß die Ultraschallschweißung mit einem bestimmten Druck und genau positionierten Schweißwerkzeugen erfolgen, damit auch der die Längsnaht der Faltschachtelpackung enthaltende Bereich in der Stegnaht bzw. Giebelnaht zuverlässig versiegelt werden kann. Aus der Praxis ist es bereits bekannt, den Amboß im Bereich dieser Längsnaht mit einer Ausnehmung zu versehen, um eine optimale Versiegelung der Giebelnaht zu ermöglichen. Auf diese Weise kann eine überhöhte Fächenpressung im Längsnahtbereich vermieden werden.

Stimmt jedoch die Lage der Ausnehmung im Amboß nicht exakt mit der tatsächlichen Position der Längsnaht der Faltschachtelpackung überein, so kommt es auf der einen Seite der Längsnaht zu einer sogenannten "Kanalbildung" und auf der anderen Seite durch zu hohe Flächenpressung zu Brandpunkten. Dies kann zu Undichtigkeiten der Packung im Bereich der die Packung oben verschließenden Schweißnaht führen. Die Erhöhung des Siegeldruckes oder der Schweißdauer vermag die vorbeschriebenen Nachteile nicht zufriedenstellend zu lösen.

Der Erfindung liegt daher die Aufgabe zugrunde, das eingangs genannte Verfahren zum Verschließen von gefüllten Faltschachtelpackungen und die entsprechende Vorrichtung so auszugestalten und weiterzubilden, daß die zuvor erwähnten Nachteile mit Sicherheit vermieden werden, um eine optimale Dichtigkeit der gefüllten Faltschachtelpackungen zu erreichen.

Hinsichtlich des Verfahrens wird die Aufgabe dadurch gelöst, daß vor der Beaufschlagung der Packung mit Ultraschall die folgenden Schritte durchgeführt werden:
- Erfassen der Position der Längsnaht jeder Faltschachtelpackung in bezug auf eine die Faltschachtelpackung transportierende Zelle und
- Ausrichten des Ambosses quer zur Transportrichtung der Faltschachtelpackungen bis die Ausnehmung für die Längsnaht mit der tatsächlichen Position der Längsnaht der nächsten zu verschließenden Faltschachtelpackung übereinstimmt.

Vorrichtungsmäßig besteht die Lösung der Aufgabe darin, daß eine Vorrichtung zum Erfassen der Position der Längsnaht einer Faltschachtelpackung in bezug auf eine die Packung transportierende Zelle vorgesehen ist, daß der Amboß quer zur Transportrichtung der Faltschachtelpackung verstellbar ist und daß eine Steuereinheit zur Ausrichtung des Ambosses in bezug auf die Längsnaht der zu siegelnden Faltschachtelpackung vorgesehen ist.

Das erfindungsgemäße Verfahren bzw. die erfindungsgemäße Vorrichtung sind besonders vorteilhaft, weil mit ihnen bei konstruktiv geringem Aufwand eine optimale Ausrichtung von Längsnaht und Amboßausnehmung ermöglicht wird. Zusätzlich ist durch die jeweilige Lage der Längsnaht eine Überprüfung der Packungszellen an der Füllmaschine möglich.

Da die befüllten Packungen auf den Zellen des Transporteurs unverschieblich angeordnet sind, ist es denkbar, daß das Erfassen der Position der Längsnaht der Faltschachtelpackung unmittelbar vor oder nach dem Befüllen erfolgt.

Es ist jedoch auch denkbar, daß das Erfassen der Position der Längsnaht der Faltschachtelpackung erst in der Siegelstellung der Giebelnaht erfolgt. Die zweite Alternative ist besonders vorteilhaft, da eine Verschiebung der Faltschachtelpackung durch irgendeine Fremdeinwirkung zuverlässig ausgeschlossen ist.

Zum Erfassen der Position der Längsnaht der Faltschachtelpackung ist in bevorzugter Ausgestaltung der Erfindung ein Tastkopf vorgesehen, welcher quer zur Transportrichtung über die hochstehende, die Längsnaht aufweisende Packungswand fährt und die ermittelten Positionen an eine Steuereinheit weitergibt. Die Steuereinheit kann in bevorzugter Weiterbildung als Mikroprozessor ausgeführt sein. Mit den von der Steuereinheit empfangenen Signalen wird die eigentliche Verstellung des Ambosses vorgenommen. Bevorzugt wird als Antrieb für den Amboß ein Schrittmotor verwendet.

Um die Spannungen innerhalb der Giebelnaht, insbesondere aufgrund der seitlich umgelegten Ohren zu reduzieren, erfolgt nach einer weiteren Lehre der Erfindung das Versiegeln der Giebelnaht nach Umlegen der vorgefalteten Giebelnaht in einem von der Vertikalen abweichenden Winkel, welcher vorzugsweise im Bereich von 30° bis 60° zur Vertikalen liegt. Dazu ist es besonders zweckmäßig, wenn der Amboß einen keilförmigen Querschnitt aufweist, um in den "Zwickelbereich" zwischen dem Packungsgiebel und der Packungsoberseite eingreifen zu können.

Die Erfindung wird nachfolgend anhand einer lediglich ein bevorzugtes Ausführungsbeispiel darstellenden Zeichnung näher erläutert. In der Zeichnung zeigen
- Fig.1: einen ersten Teil der erfindungsgemäßen Vorrichtung in perspektivischer Darstellung und
- Fig. 2: einen weiteren Teil der erfindungsgemäßen Vorrichtung in perspektivischer Darstellung.

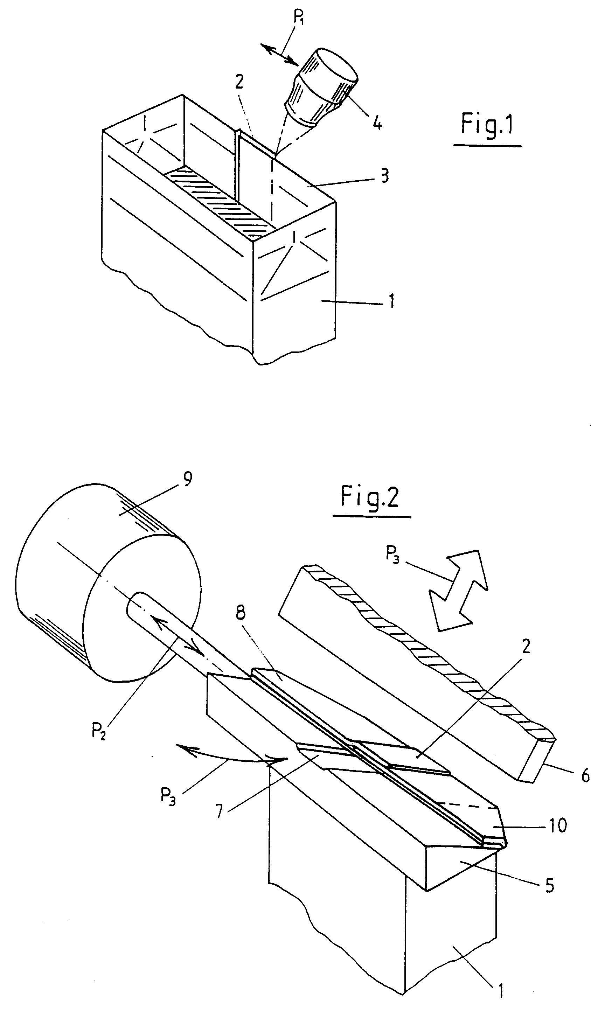

In Fig. 1 ist schematisch eine nur in ihrem oberen Bereich gezeigte Faltschachtelpackung 1 mit einer eine Längsnaht 2 aufweisenden Seitenwand 3 dargestellt. Hierbei handelt es sich um eine bereits gefüllte Faltschachtelpackung 1, welche also kurz vor dem Versiegeln, d.h. vor dem Verschließen des offenen Kopfbereiches steht.

Zum Erfassen der Position der Längsnaht 2 der Faltschachtelpackung 1 in bezug auf die die Faltschachtelpackung 1 transportierende nicht dargestellte Zelle ist ein Tastkopf 4 vorgesehen, welcher entlang des Doppelpfeiles P₁ linear quer verschiebbar ist, um die genaue Länge und Position der Längsnaht 2 festzustellen. Die vom Tastkopf 4 ermittelten Daten werden an eine nicht dargestellte Steuereinheit weitergegeben.

In Fig. 2 ist die Faltschachtelpackung 1 unmittelbar vor dem Versiegeln dargestellt. Dabei weist die Verschließeinheit einen Amboß 5 und eine Sonotrode 6 auf, welche beide nur teilweise dargestellt sind. Der Amboß 5 weist eine für die Längsnaht vorgesehene Ausnehmung 7 auf, welche mittels der linearen Verstellbarkeit des Ambosses 5 in Deckung mit der Längsnaht 2 gebracht wird. Als Antrieb dient hier vorzugsweise ein, ebenfalls nur schematisch dargestellter, Schrittmotor 9.

Mit Hilfe der von der nicht dargestellten Steuereinheit gelieferten Signale verfährt der Schrittmotor 9 entlang der durch den Doppelpfeil P₂ dargestellten Richtung den Amboß 5, bis die Ausnehmung 7 exakt zur Längsnaht 2 ausgerichtet ist. Danach fahren Amboß 5 und Sonotrode 6 entlang der Doppelpfeile P₃ in ihre Siegelposition, wobei die Längsnaht 2 die gegenüberliegende Seitenwand in die Ausnehmung 7 des Ambosses 5 hineindrückt. Auf diese Weise wird eine zuverlässig dichte Giebelnaht 8 erreicht, da sowohl die Kanalbildung als auch Brandpunkte im Bereich der Längsnaht 2 zuverlässig ausgeschlossen werden können.

Aus Fig. 2 geht hervor, daß der Querschnitt des Ambosses 5 keilförmig ausgebildet ist. Auf diese Weise lassen sich die Eigenspannungen in der Faltschachtelpackung 1, welche insbesondere durch das seitliche Anheften der heruntergeklappten Packungsohren 10 auftreten, auf ein Minimum reduzieren.

## Patentansprüche

1. Verfahren zum Verschließen von gefüllten, aus bodengesiegelten Schlauchabschnitten gebildeten oben offenen Faltschachtelpackungen (1), wobei das Verschließen durch Versiegeln und Umlegen der Giebelnaht (8) bzw. Stegnaht mittels einer Ultraschallverschweißung mit Hilfe eines eine Ausnehmung (7) für die Längsnaht (2) der Faltschachtelpackung (1) aufweisenden Ambosses (5) und einer Sonotrode (6) erfolgt,
**dadurch gekennzeichnet**, daß vor der Beaufschlagung der Packung mit Ultraschall die folgenden Schritte durchgeführt werden:
- Erfassen der Position der Längsnaht (2) jeder Faltschachtelpackung (1) in bezug auf eine die Faltschachtelpackung (1) transportierende Zelle und
- Ausrichten des Ambosses (5) quer zur Transportrichtung der Faltschachtelpackungen (1) bis die Ausnehmung (7) für die Längsnaht (2) mit der tatsächlichen Position der Längsnaht (2) der nächsten zu verschließenden Faltschachtelpackung (1) übereinstimmt.

2. Verfahren nach Anspruch 1,
**dadurch gekennzeichnet**, daß das Erfassen der Position der Längsnaht (2) der Faltschachtelpackung (1) unmittelbar vor oder nach dem Befüllen erfolgt.

3. Verfahren nach Anspruch 1 oder 2,
**dadurch gekennzeichnet**, daß das Erfassen der Position der Längsnaht (2) der Faltschachtelpackung (1) in der Stellung der Faltschachtelpackung (1) erfolgt, in der die Siegelung der Giebelnaht (8) folgt.

4. Verfahren nach einem der Ansprüche 1 bis 3,
**dadurch gekennzeichnet**, daß zum Erfassen der Position der Längsnaht (2) der Faltschachtelpackung (1) ein Tastkopf quer zur Transportrichtung der Faltschachtelpackung (1) über die hochstehende, die Längsnaht (2) aufweisende Packungswand fährt.

5. Verfahren nach einem der Ansprüche 1 bis 4,
**dadurch gekennzeichnet**, daß das Versiegeln der Giebelnaht (8) nach Umlegen der vorgefalteten Giebelnaht (8) in einem von der Vertikalen abweichenden Winkel erfolgt.

6. Verfahren nach Anspruch 5,
**dadurch gekennzeichnet**, daß als Winkel der umgelegten Giebelnaht (8) ein Bereich von 30° bis 60° zur Vertikalen gewählt wird.

7. Vorrichtung zum Füllen von aus bodengesiegelten Schlauchabschnitten gebildeten Faltschachtelpackungen (1) und Verschließen der Giebelnaht (8), mit einer Zuführeinheit für die Schlauchabschnitte, einer Vorfalteinheit, einer Fülleinheit, einer einen Amboß (5) und eine Sonotrode (6) aufweisenden Verschließeinheit und Übergabe- und Transporteinrichtungen für die Faltschachtelpackungen (1), wobei der Amboß (5) eine Ausnehmung (7) für die Längsnaht (2) der Faltschachtelpackung (1) aufweist,
**dadurch gekennzeichnet**, daß eine Vorrichtung zum Erfassen der Position der Längsnaht (2) einer Faltschachtelpackung (1) in bezug auf eine die Faltschachtelpackung (1) transportierende Zelle vorgesehen ist, daß der Amboß (5) quer zur Transportrichtung der Faltschachtelpackung (1) verstellbar ist und daß eine Steuereinheit zur Ausrichtung des Ambosses (5) in bezug auf die Längsnaht (2) der zu siegelnden Faltschachtelpackung (1) vorgesehen ist.

8. Vorrichtung nach Anspruch 7,
**dadurch gekennzeichnet**, daß zum Erfassen der Position der Längsnaht (2) der Faltschachtelpackung (1) ein quer zur Transportrichtung beweglicher Tastkopf (4) vorgesehen ist.

9. Vorrichtung nach Anspruch 7 oder 8,
**dadurch gekennzeichnet**, daß als Steuereinheit zur Ausrichtung des Ambosses (5) in bezug auf die Längsnaht (2) der zu siegelnden Faltschachtelpackung (1) ein Mikroprozessor vorgesehen ist.

10. Vorrichtung nach einem der Ansprüche 7 bis 9,
**dadurch gekennzeichnet**, daß als Antrieb für den Amboß (5) ein Schrittmotor (9) vorgesehen ist.

11. Vorrichtung nach einem der Ansprüche 7 bis 10,
**dadurch gekennzeichnet**, daß der Amboß (5) einen keilförmigen Querschnitt aufweist.

## Claims

1. Method for closing filled open-topped folding-box packaging containers (1) formed from bottom-sealed tubular portions, the closing being effected by sealing and folding over the gable seam (8) or web seam by means of ultrasonic welding with the aid of an anvil (5), having a recess (7) for the longitudinal seam (2) of the folding-box packaging container (1), and a sonotrode (6), characterized in that, before the packaging container is subjected to ultrasound, the following steps are carried out:
- the position of the longitudinal seam (2) of each folding-box packaging container (1) in relation to a cell transporting the folding-box packaging container (1) is detected, and
- the anvil (5) is aligned transversely with respect to the transporting direction of the folding-box packaging containers (1) until the recess (7) for the longitudinal seam (2) coincides with the actual position of the longitudinal seam (2) of the next folding-box packaging container (1) to be closed.

2. Method according to Claim 1, characterized in that the position of the longitudinal seam (2) of the folding-box packaging container (1) is detected immediately before or after the filling.

3. Method according to Claim 1 or 2, characterized in that the position of the longitudinal seam (2) of the folding-box packaging container (1) is detected in the position of the folding-box packaging container (1) in which the sealing of the gable seam (8) follows.

4. Method according to one of Claims 1 to 3, characterized in that, for the purpose of detecting the position of the longitudinal seam (2) of the folding-box packaging container (1), a sensing head travels over the upright wall of the packaging container having the longitudinal seam (2) transversely with respect to the transporting direction of the folding-box packaging container (1).

5. Method according to one of Claims 1 to 4, characterized in that the gable seam (8) is sealed after the pre-folded gable seam (8) has been folded over at an angle deviating from the vertical.

6. Method according to Claim 5, characterized in that a range from 30° to 60° to the vertical is chosen as the angle of the folded-over gable seam (8).

7. Device for filling folding-box packaging containers (1) formed from bottom-sealed tubular portions and closing the gable seam (8), having a feed unit for the tubular portions, a pre-folding unit, a filling unit, a closing unit having an anvil (5) and a sonotrode (6), and transferring and transporting apparatus for the folding-box packaging containers (1), the anvil (5) having a recess (7) for the longitudinal seam (2) of the folding-box packaging container (1), characterized in that a device for detecting the position of the longitudinal seam (2) of a folding-box packaging container (1) in relation to a cell transporting the folding-box packaging container (1) is provided, in that the anvil (5) is adjustable transversely with respect to the transporting direction of the folding-box packaging container (1) and in that a control unit for aligning the anvil (5) in relation to the longitudinal seam (2) of the folding-box packaging container (1) to be sealed is provided.

8. Device according to Claim 7, characterized in that, for the purpose of detecting the position of the longitudinal seam (2) of the folding-box packaging container (1), a sensing head (4) movable transversely with respect to the transporting direction is provided.

9. Device according to Claim 7 or 8, characterized in that a microprocessor is provided as the control unit for aligning the anvil (5) in relation to the longitudinal seam (2) of the folding-box packaging container (1) to be sealed.

10. Device according to one of Claims 7 to 9, characterized in that a stepping motor (9) is provided as the drive for the anvil (5).

11. Device according to one of Claims 7 to 10, characterized in that the anvil (5) has a wedge-shaped cross-section.

## Revendications

1. Procédé de fermeture d' emballages du type boîte pliée (1), formés de tronçons de tube à fond scellé et ouverts à leur partie supérieure, qui sont remplis, la fermeture s'effectuant par scellement et rabattement d'une soudure de crête (8) ou du joint de nervure, par soudage par ultrasons au moyen d'une enclume (5), comportant un évidement (7) pour le joint longitudinal (2) de l'emballage du type boîte pliée (1), et d'une sonotrode (6),
caractérisé en ce que les opérations suivantes sont exécutées avant de soumettre l'emballage aux ultrasons :
- détection de la position du joint longitudinal (2) de chaque emballage du type boîte pliée (1) par rapport à une cellule transportant l' emballage du type boîte pliée (1) et
- alignement de l'enclume (5) transversalement à la direction de transport des emballages du type boîte pliée (1) jusqu'à ce que l'évidement (7) prévu pour le joint longitudinal (2) coïncide avec la position effective du joint longitudinal (2) de l'emballage du type boîte pliée (1) suivant à fermer.

2. Procédé suivant la revendication 1, caractérisé en ce que la détection de la position du joint longitudinal (2) de l'emballage du type boîte pliée (1) a lieu immédiatement avant ou après le remplissage.

3. Procédé suivant la revendication 1 ou 2, caractérisé en ce que la détection de la position du joint longitudinal (1) de l'emballage du type boîte pliée (1) a lieu dans la position de l'emballage du type boîte pliée (1) dans laquelle le scellement de la soudure de crête (8) est effectué.

4. Procédé suivant l'une des revendications 1 à 3, caractérisé en ce que, pour détecter la position du joint longitudinal (2) de l'emballage du type boîte pliée (1), une tête de balayage se déplace transversalement à la direction de transport de l'emballage du type boîte pliée (1) sur la paroi verticale de l'emballage qui comporte le joint longitudinal (2).

5. Procédé suivant l'une des revendications 1 à 4, caractérisé en ce que le scellement de la soudure de crête (8) a lieu, après pliage de cette soudure de crête (8) préplié, suivant un angle s'écartant de la verticale.

6. Procédé suivant le revendication 5, caractérisé en ce qu'un intervalle de 30° à 60° par rapport à la verticale est choisi pour l'angle du joint de crête (8) rabattu.

7. Dispositif de remplissage d' emballages du type boîte pliée (1), formés à partir de tronçons de tube à fond scellé, et de fermeture d'une soudure de crête (8), comprenant une unité d'acheminement de tronçons de tube, une unité de prépliage, une unité de remplissage, une unité de fermeture, comportant une enclume (5) et une sonotrode (6), et des moyens de transfert et de transport des emballages du type boîte pliée (1), l'enclume (5) comportant un évidement (7) pour le joint longitudinal (2) de l'emballage du type boîte pliée (1), caractérisé en ce qu'il est prévu des moyens de détection de la position du joint longitudinal (2) d'un emballage du type boîte pliée (1) par rapport à une cellule transportant l' emballage du type boîte pliée (1), en ce que l'enclume (5) est réglable transversalement à la direction de transport de l'emballage du type boîte pliée (1) et en ce qu'il est prévu une unité de commande servant à aligner l'enclume (5) par rapport au joint longitudinal (2) de l'emballage du type boîte pliée (1) à sceller.

8. Dispositif suivant la revendication 7, caractérisé en ce que, pour détecter la position du joint longitudinal (2) de l'emballage du type boîte pliée (1), il est prévu une tête de balayage (4) mobile transversalement à la direction de transport.

9. Dispositif suivant la revendication 7 ou 8, caractérisé en ce qu'un microprocesseur est prévu en tant qu'unité de commande servant à aligner l'enclume (5) par rapport au joint longitudinal (2) de l'emballage du type boîte pliée (1) à sceller.

10. Dispositif suivant l'une des revendications 7 à 9, caractérisé en ce qu'un moteur pas à pas (9) est prévu en tant qu'entraînement pour l'enclume (5).

11. Dispositif suivant l'une des revendications 7 à 10, caractérisé en ce que l'enclume (5) présente une section transversale en forme de coin.
